# EUROPÄISCHE PATENTSCHRIFT

(11) **EP 1 365 167 B1**
(45) Veröffentlichungstag und Bekanntmachung des Hinweises auf die Patenterteilung: **31.08.2005**
(21) Anmeldenummer: 03011606.5
(22) Anmeldetag: 22.05.2003
(51) Int. Cl.: F16D 25/08

(54) **Vorrichtung zum wahlweise Aus- bzw. Einrücken einer Reibkupplung für Kraftfahrzeuge**
Actuating device for a friction clutch for a motor vehicle
Dispositif d'actionnement pour embrayage à friction pour véhicule automobile

(30) Priorität: 23.05.2002 DE 10222730
(43) Veröffentlichungstag der Anmeldung: 26.11.2003
(73) Patentinhaber: FTE automotive GmbH & Co. KG, 96106 Ebern (DE)
(72) Erfinder: Reul, Alexander, 96158 Frensdorf (DE); Wöhner, Steffen, 96524 Gefell (DE); Zsari, Geza, 96106 Ebern (DE)
(74) Vertreter: Oppermann, Mark

(56) Entgegenhaltungen:
- WO-A-98/27351
- DE-A- 10 039 242
- DE-A- 10 051 374
- DE-A- 10 102 300
- US-A1- 2001 030 097
- PATENT ABSTRACTS OF JAPAN vol. 2003, no. 03, 5. Mai 2003 (2003-05-05) & JP 2002 340019 A (KOYO SEIKO CO LTD), 27. November 2002 (2002-11-27)

## Beschreibung

Die vorliegende Erfindung bezieht sich auf eine Vorrichtung zum wahlweise Aus- bzw. Einrücken einer Reibkupplung für Kraftfahrzeuge nach dem Oberbegriff des Patentanspruchs 1. Eine solche Vorrichtung ist aus der DE 10 051 374 A bekannt. Insbesondere bezieht sich die Erfindung auf einen Zentralausrücker einer hydraulischen Kupplungsbetätigung, wie sie massenweise in der Automobilindustrie zum Einsatz kommen.

Eine herkömmliche hydraulische Kupplungsbetätigung für eine Kraftfahrzeug-Reibkupplung hat einen an einen mit Hydraulikflüssigkeit gefüllten Ausgleichsbehälter angeschlossenen Geberzylinder, der beispielsweise über ein Kupplungspedal oder einen elektromotorischen Antrieb betätigt werden kann. Der Geberzylinder ist über eine Druckleitung mit einem Nehmerzylinder hydraulisch verbunden, so daß der durch Niedertreten des Kupplungspedals bzw. elektromotorische Verschiebung des Geberzylinderkolbens im Geberzylinder erzeugte Druck über die Flüssigkeitssäule in der Druckleitung auf den Nehmerzylinder übertragbar ist. Im Ergebnis wird das Ausrücklager der Reibkupplung über den Nehmerzylinderkolben mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen. Auch sind hydraulische Kupplungsbetätigungen bekannt, bei denen der Ausrückmechanismus der Reibkupplung von einem damit wirkverbundenen Stell- oder Nehmerzylinder betätigt werden kann, der seinerseits über einen hydraulischen Servokreis angesteuert wird.

Um eine möglichst gleichmäßige Betätigung der Reibkupplung bei geringem Platzbedarf des Stell- oder Nehmerzylinders zu gewährleisten, ist im Stand der Technik des weiteren vorgeschlagen worden, den Nehmerzylinder als Ringzylinder auszubilden, der um die kupplungs- bzw. Getriebewelle herum angeordnet und am Getriebe befestigt ist. In dem Ringzylinder ist ein Ringkolben in axialer Richtung der Kupplungs- bzw. Getriebewelle gleitend angeordnet, der mit dem Ausrücklager der Reibkupplung in Wirkverbindung steht. Bei hydraulischer Beaufschlagung des Ringzylinders über die Druckleitung wirkt der Ringkolben über das Ausrücklager auf den Ausrückmechanismus der Reibkupplung, um diese auszurücken. Derartige Nehmerzylinder werden aufgrund ihrer zur Kupplungs- bzw. Getriebewelle konzentrischen Anordnung auch als Zentralausrücker bezeichnet.

Bei derartigen hydraulischen Kupplungsbetätigungen ist es bereits bekannt, Sensoreinrichtungen kupplungsbetätigungsseitig vorzusehen, d.h. ohne daß Eingriffe an den eigentlichen Bauteilen der Reibkupplung notwendig wären, um mittelbar auf die Stellung der Kupplungsdruckplatte zurückzuschließen. Eine solche Sensierung ermöglicht zum einen eine Aussage über den Verschleißzustand der Reibkupplung. Zum anderen kann der Aus- bzw. Einrückzustand der Reibkupplung ermittelt werden, so daß z.B. bei automatisierten Reibkupplungen die Kupplungsbetätigung im gewünschten Maße automatisch gesteuert werden kann, was beispielsweise eine Reduzierung der Kupplungsschaltzeiten ermöglicht. Die Ergebnisse der Sensierung können schließlich ebenfalls für Sicherheitsvorkehrungen im Betrieb des Kraftfahrzeugs verwendet werden, beispielsweise dafür, daß das Kraftfahrzeug nur dann gestartet werden kann, wenn das Kupplungspedal niedergetreten wird.

In diesem Zusammenhang offenbart die DE-A-41 20 643 eine Vorrichtung zum wahlweise Aus- bzw. Einrücken einer Reibkupplung für Kraftfahrzeuge, mit einem hydraulischen Betätigungsorgan in der Form eines klassischen Nehmerzylinders oder eines Zentralausrückers. Dieser Nehmerzylinder oder Zentralausrücker ist über wenigstens ein Betätigungskraft-Übertragungsglied in der Form eines Ausrücklagers zur Aufbringung einer Betätigungskraft mit der Reibkupplung wirkverbunden. Das Ausrücklager ist mittels einer im Druckraum des klassischen Nehmerzylinders vorgesehenen oder, im Fall eines Zentralausrückers, zwischen dem Gehäuse des Zentralausrückers und dem Ausrücklager angeordneten Vorlastfeder in Ausrückrichtung vorgespannt. Die Vorlastfeder, deren Kraft erheblich geringer ausgelegt ist als die Kraft der eigentlichen Kupplungsfeder, sorgt für eine dauernde leichte Anlage des Ausrücklagers an den weiteren Ausrückteilen der Reibkupplung, so daß zum einen zwischen den Betätigungskraft-Übertragungsgliedern bzw. Ausrückteilen - im Fall eines klassischen Nehmerzylinders also zwischen Kolben, Druckbolzen, Ausrückhebel, Ausrücklager und Kupplungsdruckplatte bzw. im Fall eines Zentralausrückers zwischen Ausrücklager und Kupplungsdruckplatte - kein Spiel vorhanden ist. Zum anderen läuft das Ausrücklager aufgrund der von der Vorlastfeder aufgebrachten Vorspannung ständig mit, was den Verschleiß des Ausrücklagers gegenüber einer Konstruktion, bei der das Ausrücklager beim Aus- bzw. Einrückvorgang beschleunigt bzw. abgebremst werden würde, stark vermindert. Bei einer Ausrückbewegung des Ausrücklagers wird die Vorlastfeder entlastet, bei einer Einrückbewegung hingegen belastet.

Schließlich ist gemäß diesem Stand der Technik eine Sensoreinrichtung vorgesehen, die einen im bzw. am Nehmerzylinder oder Zentralausrücker angeordneten Wegsensor aufweist. Der Wegsensor dient hier in einer einfachen Ausführung lediglich dazu, den Verschleißzustand der Reibkupplung bei Erreichen der Verschleißgrenze der Reibbeläge an der Kupplungsscheibe über eine Anzeige sichtbar zu machen. Hierfür ist der Wegsensor bei einem klassischen Nehmerzylinder als Widerstandselement ausgeführt, das bei einer verschleißbedingten Rückwärtsbewegung der Kolbenstange durch eine Kante an der Kolbenstange zerstört wird und somit das Erreichen der Verschleißgrenze sensiert. Alternativ dazu wird ein in das Gehäuse eines klassischen Nehmerzylinders eingesetzter Schalter vorgeschlagen, der von radial außen in den Druckraum hineinreicht und bei entsprechendem Verschleißzustand der Reibbeläge durch die Außenkontur des Kolbens betätigt wird. Weitere Alternativen sehen vor, beispielsweise in der dem Kolben gegenüberliegenden Wandung des Nehmerzylindergehäuses Kontaktstifte anzuordnen, die bei entsprechendem Verschleißzustand der Reibbeläge durch z.B. die elektrisch leitende Stirnwand des Kolbens elektrisch miteinander verbunden werden, oder einen hydraulischen Druckschalter am Nehmerzylindergehäuse anzuordnen, mittels dessen der hydraulische Druck im Druckraum erfaßt werden kann. Bei letzterer Alternative ist zudem eine mit dem Druckraum hydraulisch verbundene Rückschlagventilanordnung vorgesehen, die mittels eines am Kolben angebrachten Stößels mechanisch betätigt werden kann, um bei entsprechendem Verschleißzustand der Reibbeläge den Druck im Druckraum bis auf Null abzubauen.

Des weiteren dient bei diesem Stand der Technik der Wegsensor in einer komplexeren Ausführung dazu, neben dem Verschleißzustand der Reibkupplung auch die Stellung des Ausrücksystems und somit die Einrückstellung der Kupplung zu sensieren, um eine automatische Kupplungsbetätigung so ermöglichen. Hierbei wird die Relativbewegung zwischen dem Kolben und dem Zylindergehäuse mittels einer Sensoranordnung erfaßt, die einen entsprechend der Relativbewegung veränderlichen Widerstand oder eine demgemäß veränderliche Kapazität oder Induktivität aufweist. Gemein ist diesen Alternativen eine zweiteilige Ausbildung der Sensoranordnung, mit einem zylindergehäuseseitigen, ortsfesten Teil und einem relativ dazu beweglichen, kolbenseitigen Teil.

Obgleich bei diesem Stand der Technik die Sensoreinrichtungen vorteilhaft kupplungsbetätigungsseitig vorgesehen sind, d.h. ohne daß Eingriffe an den eigentlichen Bauteilen der Reibkupplung notwendig wären, ist ein Nachteil dieses Stands der Technik darin zu sehen, daß die Integration der jeweiligen Wegmeßeinrichtung in den Nehmerzylinder bzw. Zentralausrücker verhältnismäßig aufwendig ist.

Der Erfindung liegt demgegenüber die Aufgabe zugrunde, eine Vorrichtung zum wahlweise Aus- bzw. Einrücken einer Reibkupplung für Kraftfahrzeuge zu schaffen, bei der eine für den Aus- bzw. Einrückzustand und/oder den Verschleißzustand der Reibkupplung repräsentative Größe auf einfache Weise erfaßt werden kann.

Diese Aufgabe wird durch die im Patentanspruch 1 angegebenen Merkmale gelöst. Vorteilhafte und/oder zweckmäßige Weiterbildungen der Erfindung sind Gegenstand der Patentansprüche 2 bis 13.

Erfindungsgemäß ist bei einer Vorrichtung zum wahlweise Aus- bzw. Einrücken einer Reibkupplung für Kraftfahrzeuge, die ein vorzugsweise hydraulisches Betätigungsorgan hat, das über wenigstens ein mittels einer Feder in Ausrückrichtung vorgespanntes Betätigungskraft-Übertragungsglied zur Aufbringung einer Betätigungskraft mit der Reibkupplung wirkverbunden ist, und welche eine Sensoreinrichtung zur Erfassung einer für den Aus- bzw. Einrückzustand und/oder den Verschleißzustand der Reibkupplung repräsentativen Größe mit einem Sensor aufweist, mittels des Sensors die Kraft der Feder zur Vorspannung des Betätigungskraft-Übertragungsglieds oder einer dazu parallel geschalteten Feder als die für den Aus- bzw. Einrückzustand und/oder den Verschleißzustand der Reibkupplung repräsentative Größe erfaßbar.

Die Erfindung nutzt somit in einer ersten Alternative in vorteilhafter Weise den Umstand, daß das Betätigungskraft-Übertragungsglied aus den eingangs genannten Gründen mittels einer Feder in Ausrückrichtung vorgespannt ist, deren Charakteristik bekannt ist. Jeder Kraft dieser Feder ist ein bestimmter Federweg zugeordnet, so daß über die mittels des Sensors jeweils erfaßte Federkraft auf den Federweg und somit mittelbar auf die Stellung des Betätigungskraft-Übertragungsglieds zurückgeschlossen werden kann. Aus der Stellung des Betätigungskraft-Übertragungsglieds ergibt sich sodann der Ein- bzw. Ausrückzustand der Reibkupplung. Auch ändert sich die Stellung des Betätigungskraft-Übertragungsglieds im unbetätigten Zustand der Reibkupplung in Abhängigkeit vom Verschleiß der Reibbeläge der Reibkupplung - das Betätigungskraft-Übertragungsglied wandert mit zunehmendem Kupplungsverschleiß entgegen der Betätigungsrichtung und die Vorspannung der Feder nimmt demgemäß zu - so daß über die sensierte Vorspannkraft der Feder ebenfalls auf den Verschleißzustand der Reibkupplung zurückgeschlossen werden kann. Im Ergebnis ist es auf einfache Weise mit geringstem konstruktiven Aufwand und gegenüber dem eingangs geschilderten Stand der Technik verbesserter Wirtschaftlichkeit möglich, den Ausrück- bzw. Einrückweg der Reibkupplung sowie deren Belagverschleiß zu ermitteln. Die im obigen Stand der Technik vorgeschlagene, aufwendige und bauraumbeanspruchende zweiteilige Ausbildung der Sensoreinrichtung, mit einem gehäuseseitigen Teil und einem kolbenseitigen Teil, kann entfallen.

In einer zweiten Alternative ist erfindungsgemäß mittels des Sensors die Kraft einer zu der Feder zur Vorspannung des Betätigungskraft-Übertragungsglieds parallel geschalteten Feder als die für den Aus- bzw. Einrückzustand und/oder den Verschleißzustand der Reibkupplung repräsentative Größe erfaßbar. Auch bei dieser parallelen Feder, deren Charakteristik bekannt ist, ist jeder Federkraft ein bestimmter Federweg zugeordnet, so daß auch hier über die mittels des Sensors jeweils erfaßte Federkraft auf den Federweg und somit mittelbar auf die Stellung des Betätigungskraft-Übertragungsglieds zurückgeschlossen werden kann, woraus sich wiederum der Ein- bzw. Ausrückzustand der Reibkupplung und/oder deren Verschleißzustand ergibt. Ein Vorteil dieser Alternative liegt darin, daß die parallel geschaltete Feder kleiner bzw. schwächer dimensioniert werden kann als die Feder zur Vorspannung des Betätigungskraft-Übertragungsglieds. Kleinere Federn aber haben engere Fertigungs- bzw. Krafttoleranzen sowie kleinere innere Reibungsverluste und tendieren in einem wesentlich geringeren Maße zum Setzen unter Last, d.h. einer sich im Laufe der Zeit verändernden Federkonstante, so daß unerwünschte Lastschwankungen am Sensor weitestgehend vermieden werden. Im Ergebnis gestattet die zweite Alternative gegenüber der ersten Alternative mit nur geringem baulichen Mehraufwand die Verwendung von Federn zur Vorspannung des Betätigungskraft-Übertragungsglieds, die im Hinblick auf die hier doch recht breiten Fertigungs- bzw. Krafttoleranzen nicht aufwendig vorsortiert werden müssen. Außerdem ist in der Auswerteelektronik der Sensoreinrichtung kein bzw. nur ein geringer Kompensationsaufwand für unerwünschte Lastschwankungen am Sensor erforderlich.

Nach der Lehre des Patentanspruchs 2 handelt es sich bei dem Sensor vorzugsweise um einen elektrischen Drucksensor, der auf einfache Weise an eine geeignete Auswerteschaltung der Bordelektronik des Kraftfahrzeugs angeschlossen werden kann. So können etwa Kohlescheiben als elektrischer Drucksensor Verwendung finden, die zu einer Säule aufeinandergeschichtet sind, an der die Feder zur Vorspannung des Betätigungskraft-Übertragungsglieds bzw. die dazu parallel geschaltete Feder anliegt. Der Übergangswiderstand dieser Scheiben hängt sehr stark vom Druck ab, mit dem sie zusammengepreßt werden, so daß damit die Druckmessung auf eine Widerstandsmessung zurückgeführt ist. Bevorzugt wird jedoch, wie im Patentanspruch 3 angegeben, wenn der elektrische Drucksensor ein Piezoelement aufweist. Ein solches Piezoelement hat eine Mehrzahl von Quarzscheiben, bei deren Druckbelastung Ladungen auf der Quarzoberfläche entstehen, die dem Druck direkt proportional sind und auf einfache Weise abgegriffen werden können. Ein Vorteil der Verwendung eines Piezoelements ist darin zu sehen, daß das Piezoelement auch bei raschen Druckschwankungen schnell reagiert, die hier auftreten können, wenn die Betätigungsgeschwindigkeit der Reibkupplung hoch ist. Die Verwendung eines Piezoelements hat darüber hinaus den Vorteil, daß es sich hierbei um passives Element handelt, das keiner elektrischen Energiezufuhr von außen bedarf. Schließlich sind Piezoelemente als Massenartikel preiswert erhältlich bzw. herstellbar.

Entsprechend dem Patentanspruch 4 ist der Sensor zweckmäßig mit der Feder zur Vorspannung des Betätigungskraft-Übertragungsglieds oder der dazu parallel geschalteten Feder in Reihe bzw. einer Serienschaltung angeordnet, so daß kein zusätzlicher radialer Bauraum benötigt wird. Auch ein zusätzlicher axialer Bauraum wird hierfür nicht benötigt, nachdem die Feder unter lediglich moderater Zunahme der Vorspannkraft um das Dickenmaß des Sensors einfedern kann.

Der Patentanspruch 5 sieht vor, daß der Sensor auf der vom Betätigungskraft-Übertragungsglied abgewandten Seite der Feder zur Vorspannung des Betätigungskraft-Übertragungsglieds oder der dazu parallel geschalteten Feder angeordnet ist. Eine solche Anordnung des Sensors hat den Vorteil, daß insbesondere von der Verbrennungskraftmaschine des Kraftfahrzeugs induzierte Schwingungen, die von der Reibkupplung über das Betätigungskraft-Übertragungsglied übertragen werden, durch die Eigenschaften der Feder weitgehend gedämpft werden und somit nicht ungedämpft auf den Sensor einwirken können. Dies führt zu weitgehend ungestörten bzw. eindeutigen Sensorsignalen, die einfacher ausgewertet werden können.

Grundsätzlich kann die erfindungsgemäße Sensoreinrichtung an jeder Kupplungsbetätigung für Kraftfahrzeuge zum Einsatz kommen, bei der ein Betätigungsorgan - welches auch nicht unbedingt hydraulisch arbeiten muß - über wenigstens ein mittels einer Feder in Ausrückrichtung vorgespanntes Betätigungskraft-Übertragungsglied zur Aufbringung einer Betätigungskraft mit der Reibkupplung wirkverbunden ist. So kann die erfindungsgemäße Sensoreinrichtung beispielsweise in Serie geschaltet mit einer Vorlastfeder im Druckraum eines klassischen Nehmerzylinders einer hydraulischen Kupplungsbetätigung integriert sein. Ein hier besonders bevorzugter Anwendungsort für die erfindungsgemäße Sensoreinrichtung ergibt sich auch aus dem Patentanspruch 6, gemäß dem das Betätigungsorgan vorzugsweise ein Zentralausrücker einer hydraulischen Kupplungsbetätigung ist, der über ein mittels einer Vorlastfeder in Ausrückrichtung vorgespanntes Ausrücklager als Betätigungskraft-übertragungsglied zur Aufbringung einer Betätigungskraft mit der Reibkupplung wirkverbunden ist. Bei einem Zentralausrücker einer hydraulischen Kupplungsbetätigung kann die erfindungsgemäße Sensoreinrichtung nämlich besonders einfach und auch nachträglich montiert bzw. integriert werden, und zwar ohne daß hierfür Eingriffe an den hydraulischen Komponenten erforderlich wären.

Nach der Lehre des Patentanspruchs 7 ist die Vorlastfeder als Druckfeder, vorzugsweise Schraubendruckfeder ausgebildet, die sich über ihr eines Ende am Ausrücklager und über ihr anderes Ende an einem Gehäuse des Zentralausrückers abstützt, wobei der Sensor im Kraftfluß zwischen der Vorlastfeder und dem Gehäuse des Zentralausrückers angeordnet ist, so daß sich u.a. die bereits unter Bezugnahme auf den Patentanspruch 5 diskutierten Vorteile ergeben.

Gemäß dem Patentanspruch 8 ist am gehäuseseitigen Ende der Vorlastfeder ein Federteller vorgesehen, über den sich die Vorlastfeder am Gehäuse des Zentralausrückers abstützt, wobei der Sensor am oder im Federteller angeordnet ist. Somit wird in vorteilhafter Weise die Nutzung des Standardbauteils Federteller erweitert, der im Stand der Technik - siehe z.B. die DE-A-197 16 473 der Anmelderin - bereits als Aufnahme für einen ggf. am Zentralausrücker vorgesehenen Schutzbalg und/oder der Verdrehsicherung der Vorlastfeder diente. Nach der Lehre des Patentanspruchs 9 weist hierbei der Federteller zweckmäßig einen Befestigungsabschnitt auf, in dem der Sensor und vorzugsweise auch eine Auswerteelektronik für den Sensor aufgenommen sind. Diese Teile der Sensoreinrichtung bedürfen somit nur noch eines Anschlusses an den Bordcomputer des Kraftfahrzeugs über eine einfache Kabelverbindung.

Der Patentanspruch 10 sieht vor, daß der Federteller mit Hilfe von drei Auflagerabschnitten statisch bestimmt an einer Planfläche des Gehäuses des Zentralausrückers anliegt, wobei der Sensor einen Betätigungsabschnitt aufweist, der einen der drei Auflagerabschnitte ausbildet. Die statisch bestimmte Anlage der Auflagerabschnitte an der Planfläche des Gehäuses des Zentralausrückers ist einer definierten Verpressung des Sensors und somit dem Erhalt eindeutiger Sensorsignale förderlich. Entsprechendes gilt für eine alternative Ausgestaltung der Vorrichtung, bei der, wie im Patentanspruch 11 angegeben, sich die Vorlastfeder an drei Punkten an einer Planfläche des Gehäuses des Zentralausrückers abstützt, wozu ein Betätigungsabschnitt des auf das gehäuseseitige Ende der Vorlastfeder aufgesteckten Sensors einen Auflagerabschnitt ausbildet, während zwei weitere Auflagerabschnitte durch sich in Richtung der Planfläche erstreckende, vorteilhaft einfach herstellbare Ausbiegungen der letzten gehäuseseitigen Windung der Vorlastfeder oder zwei darauf aufgesteckte Auflagerteile ausgebildet sind.

Eine weitere Alternative der Sensoranbindung ist im Patentanspruch 12 angegeben, gemäß dem das Gehäuse des Zentralausrückers eine Bohrung aufweist, in welcher der Sensor angeordnet ist, wobei ein sich in Richtung der Bohrung erstreckender Endabschnitt der Vorlastfeder in die Bohrung eingreift und betätigungswirksam am Sensor anliegt. Bei dieser Ausgestaltung der Vorrichtung dient die Bohrung vorteilhaft zugleich der Aufnahme des Sensors als auch der Verdrehsicherung der Vorlastfeder.

Bei der zu der Feder zur Vorspannung des Betätigungskraft-Übertragungsglieds parallel geschalteten Feder kann es sich schließlich grundsätzlich um eine Druckfeder handeln. Bevorzugt ist jedoch, wenn die zu der Feder zur Vorspannung des Betätigungskraft-Übertragungsglieds parallel geschaltete Feder eine Zugfeder ist, wie im Patentanspruch 13 angegeben. Zwar wirkt eine solche Zugfeder mit ihrer im Verhältnis zur Vorlastfeder geringen Federkraft der Federkraft der Vorlastfeder entgegen. Dafür sind an einer Zugfeder aber Führungsmaßnahmen entbehrlich, welche bei einer Druckfeder vorgesehen werden müßten, um ein seitliches Aus- bzw. Wegbiegen zu verhindern, und die zu unerwünschten Reibungsverlusten führen könnten.

Im folgenden wird die Erfindung anhand bevorzugter Ausführungsbeispiele unter Bezugnahme auf die beigefügten, teilweise schematischen Zeichnungen näher erläutert. Darin zeigen:
- Fig. 1: eine Draufsicht auf einen Zentralausrücker einer hydraulischen Kupplungsbetätigung als Beispiel für ein hydraulisches Betätigungsorgan einer Vorrichtung zum wahlweise Aus- bzw. Einrücken einer Reibkupplung für Kraftfahrzeuge, mit einer erfindungsgemäßen Sensoreinrichtung, deren Sensor mit einer Vorlastfeder zusammenwirkt,
- Fig. 2: eine in der Zeichnungsebene um 90° im Uhrzeigersinn gedrehte Schnittansicht des Zentralausrückers gemäß Fig. 1 entsprechend der Schnittverlaufslinie II-II in Fig. 1,
- Fig. 3: eine vergrößerte perspektivische Darstellung der Vorlastfeder des in den Fig. 1 und 2 gezeigten Zentralausrückers, mit einem daran angebrachten Federteller, an dem ein erfindungsgemäßer Sensor vorgesehen ist,
- Fig. 4: eine Draufsicht auf den in Fig. 3 gezeigten Federteller von rechts in Fig. 3,
- Fig. 5: eine Schnittansicht der Vorlastfeder und des Federtellers gemäß Fig. 3 entsprechend der Schnittverlaufslinie V-V in Fig. 4,
- Fig. 6: eine perspektivische Darstellung einer Vorlastfeder für einen Zentralausrücker gemäß einem anderen Ausführungsbeispiel, mit einem darauf aufgesteckten, erfindungsgemäßen Sensor,
- Fig. 7: eine abgebrochene Längsschnittansicht des Gehäuses eines Zentralausrückers gemäß einem weiteren Ausführungsbeispiel, mit einer Bohrung, in der ein erfindungsgemäßer Sensor angeordnet ist und in die ein sich in Richtung der Bohrung erstreckender Endabschnitt einer Vorlastfeder des Zentralausrückers eingreift,
- Fig. 8: eine perspektivische Darstellung eines anderen Zentralausrückers einer hydraulischen Kupplungsbetätigung als weiteres Beispiel für ein hydraulisches Betätigungsorgan einer Vorrichtung zum wahlweise Ausbzw. Einrücken einer Reibkupplung für Kraftfahrzeuge, mit einer eher schematisch dargestellten, erfindungsgemäßen Sensoreinrichtung, deren Sensor mit einer zur Vorlastfeder parallel geschalteten Feder zusammenwirkt,
- Fig. 9: eine Draufsicht auf den Zentralausrücker gemäß Fig. 8 und
- Fig. 10: eine Schnittansicht des Zentralausrückers gemäß Fig. 8 entsprechend der Schnittverlaufslinie X-X in Fig. 9.

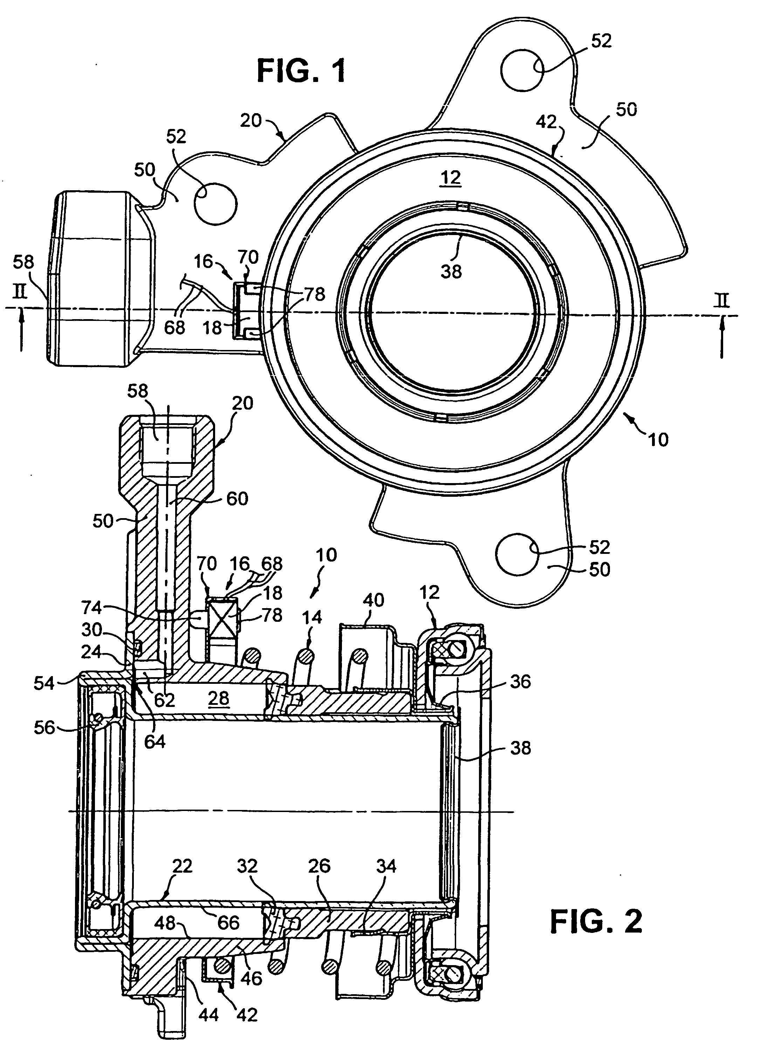

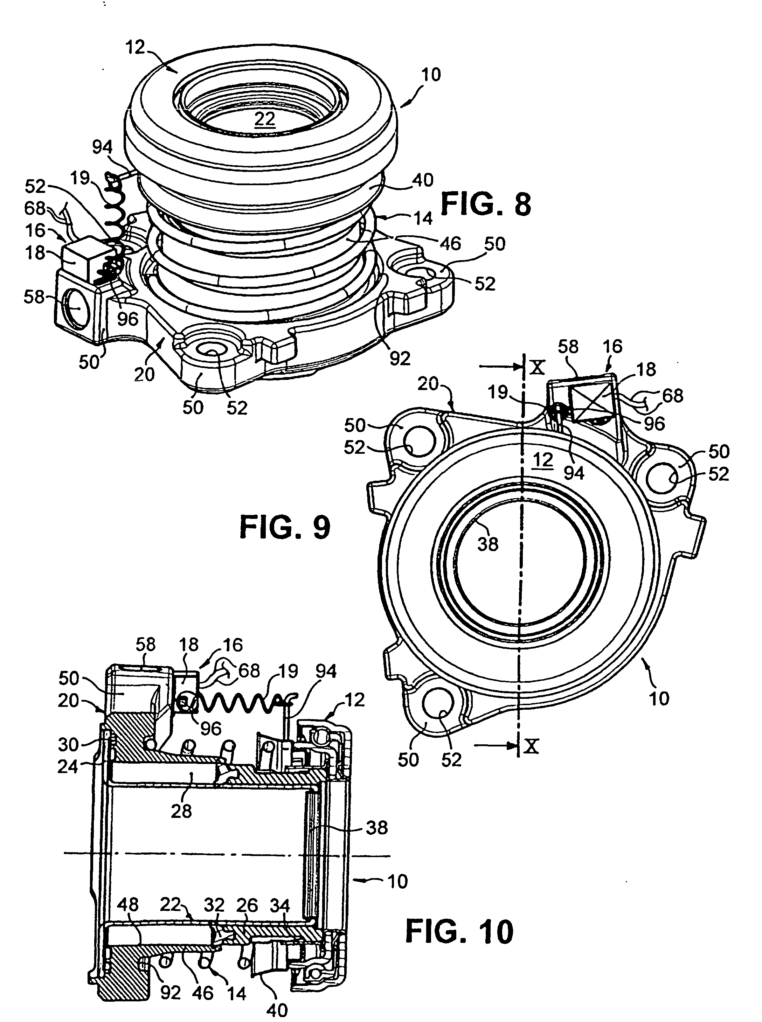

Die Fig. 1 und 2 bzw. 8 bis 10 zeigen einen Zentralausrücker 10 als Betätigungsorgan einer hydraulischen Kupplungsbetätigung für Trockenreibkupplungen im nicht montierten Zustand in Grundstellung. Am in Fig. 2 bzw. 10 rechten Ende des Zentralausrückers 10 ist ein an sich bekanntes Ausrücklager 12 als Betätigungskraft-Übertragungsglied angeordnet, über das der Zentralausrücker 10 mit der Trockenreibkupplung (nicht dargestellt) zur Aufbringung einer Betätigungskraft in an sich bekannter Weise wirkverbunden ist. Das Ausrückiager 12 ist mittels einer Vorlastfeder 14, in den dargestellten Ausführungsbeispielen eine Schraubendruckfeder, in Ausrückrichtung, d.h. in Fig. 2 bzw. 10 nach rechts definiert vorgespannt. Ferner ist eine nachfolgend noch näher beschriebene Sensoreinrichtung 16 mit einem lediglich schematisch dargestellten Sensor 18 vorgesehen, die der Erfassung einer für den Aus- bzw. Einrückzustand und den Verschleißzustand der Trockenreibkupplung repräsentativen Größe dient. Wesentlich ist, wie noch im Detail erläutert werden wird, daß mittels des Sensors 18 die Kraft der Vorlastfeder 14 zur Vorspannung des Ausrücklagers 12 (Fig. 1 bis 7) oder einer dazu parallel geschalteten Feder 19 (Fig. 8 bis 10) als die für den Aus- bzw. Einrückzustand und den Verschleißzustand der Trockenreibkupplung repräsentative Größe erfaßbar ist.

Der Zentralausrücker 10 weist ein im Ausführungsbeispiel gemäß den Fig. 1 und 2 metallisches Gehäuse 20 auf, das eine vorzugsweise aus einem Stahlblech gezogene Hülse 22 konzentrisch umgibt. Die Hülse 22 hat an ihrem in Fig. 2 linken Ende einen sich in radialer Richtung erstreckenden, kreisringförmigen Flansch 24, mittels dessen die Hülse 22 am Gehäuse 20 zentriert befestigt ist. Auf der Hülse 22 ist ein im dargestellten Ausführungsbeispiel metallischer Ringkolben 26 gleitbeweglich geführt, der zusammen mit dem Gehäuse 20 und der Hülse 22 bzw. deren Flansch 24 einen ringförmigen Druckraum 28 variabel begrenzt. Der Druckraum 28 ist gegenüber der Umgebung mittels einer zwischen dem Gehäuse 20 und dem Flansch 24 vorgesehenen statischen Dichtung in der Form eines O-Rings 30 sowie einer dynamischen Dichtung in der Form einer elastomeren Dichtmanschette 32, die an dem in Fig. 2 linken Ende des Ringkolbens 26 geeignet angebracht ist, abgedichtet.

An dem in Fig. 2 rechten Ende des Ringkolbens 26 ist ein im wesentlichen zylindrisches Blechteil 34 geeignet befestigt, welches das mittels eines Sicherungsrings 36 gesicherte Ausrücklager 12 trägt, so daß dieses bei Druckbeaufschlagung des Druckraums 28 mittels des Ringkolbens 26 in axialer, d.h. in Fig. 2 horizontaler Richtung verschiebbar ist, um die Trockenreibkupplung in an sich bekannter Weise aus- bzw. einzurücken. In Fig. 2 ist ebenfalls ein am rechten Ende der Hülse 22 befestigter Blechring 38 zu erkennen, der in radialer Richtung über die Hülse 22 vorsteht und somit einen Anschlag für das Blechteil 34 bzw. den Ringkolben 26 bildet, welcher verhindert, daß der Ringkolben 26 mit den damit verbundenen Bauteilen im nicht montierten Zustand des Zentralausrückers 10 von der Hülse 22 heruntergezogen werden kann.

Die Vorlastfeder 14 stützt sich an ihrem in Fig. 2 rechten Ende über einen zwischen dem Blechteil 34 und dem Ausrücklager 12 eingefügten, aus einem Metallblech tiefgezogenen Federteller 40, an dem auch ein hier nicht gezeigter Schutzbalg für den Zentralausrücker 10 befestigt sein kann, am Ausrücklager 12 ab. An ihrem in Fig. 2 linken Ende stützt sich die Vorlastfeder 14 über einen weiteren, aus einem Metallblech tiefgezogenen Federteller 42 auf noch zu beschreibende Weise an einer ringförmigen Planfläche 44 des Gehäuses 20 ab.

Zu dem Gehäuse 20 des in den Fig. 1 und 2 dargestellten Zentralausrückers 10 ist des weiteren anzumerken, daß es einen im wesentlichen hohlzylindrischen Wandungsabschnitt 46 hat, der eine zentrale Durchgangsbohrung 48 mit konstantem Durchmesser aufweist und an seinem in Fig. 2 linken Ende in drei Flanschabschnitte 50 übergeht, die die Fig. 1 in der Draufsicht zeigt. Jeder der Flanschabschnitte 50 ist mit einem Befestigungsauge 52 versehen, die im Kraftfahrzeug der Befestigung des Zentralausrückers 10 an einer Getriebewand bzw. einem Getriebedeckel (nicht dargestellt) mittels beispielsweise Schrauben (nicht dargestellt) dienen, welche die Befestigungsaugen 52 durchgreifen. Im montierten Zustand des Zentralausrückers 10 erstreckt sich die Kupplungs- bzw. Getriebewelle (nicht dargestellt) durch die Hülse 22 hindurch, wobei ein an einem Fortsatz 54 des Flansches 24 gehaltener Wellendichtring 56 am Außenumfang der Kupplungs- bzw. Getriebewelle dichtend anliegt.

Das Gehäuse 20 des Zentralausrückers 10 ist schließlich mit einem Hydraulikanschluß 58 versehen, an den eine zu einem Geberzylinder (nicht dargestellt) führende Druckleitung (nicht dargestellt) angeschlossen werden kann. Der Hydraulikanschluß 58 ist über eine sich radial durch den in Fig. 1 nach links zeigenden Flanschabschnitt 50 hindurcherstreckende Bohrung 60, eine sich daran anschließende, axial verlaufende Querbohrung 62 und einen Ringspalt 64, der axial zwischen dem Wandungsabschnitt 46 des Gehäuses 20 und dem Flansch 24 der Hülse 22 vorgesehen ist, mit dem Druckraum 28 verbunden, um die Zufuhr von Hydraulikflüssigkeit zu dem Druckraum 28 hin zu gestatten, mittels der der Ringkolben 26 verschoben werden kann. Hierbei bildet die Außenumfangsfläche 66 der Hülse 22, die sich koaxial zur Durchgangsbohrung 48 des Gehäuses 20 über die gesamte Länge der Durchgangsbohrung 48 und darüber hinaus erstreckt, eine Lauf- bzw. Führungsfläche für den Ringkolben 26 aus, an dem druckraumseitig die in Fig. 2 zur Vereinfachung der Darstellung im unverformten Zustand gezeigte Dichtmanschette 32 befestigt ist.

Der eigentliche hydraulische Betrieb des Zentralausrückers 10 in dem im Kraftfahrzeug montierten Zustand ist hinlänglich bekannt. Auf eine diesbezügliche Beschreibung soll daher an dieser Stelle verzichtet werden. Es ist jedenfalls ersichtlich, daß bei einer Bewegung des ggf. druckbeaufschlagten Ringkolbens 26 und damit des Ausrücklagers 12 die zwischen dem Ausrücklager 12 und der Planfläche 44 des Gehäuses 20 eingespannte Vorlastfeder 14 zusammengedrückt (Bewegung des Ringkolbens 26 nach links in Fig. 2) bzw. entspannt wird (Bewegung des Ringkolbens 26 nach rechts in Fig. 2). Hierbei ändert sich entsprechend der vorzugsweise linearen Kraft-Weg-Charakteristik der Vorlastfeder 14 die mittels des Sensors 18 der Sensoreinrichtung 16 erfaßbare Kraft der Vorlastfeder 14. Mit anderen Worten gesagt, ist es über die bekannte Kraft-Weg-Charakteristik der Vorlastfeder 14 in Kenntnis der Kraft der Vorlastfeder 14 möglich, auf den Federweg der Vorlastfeder 14 und damit den Hub des Ringkolbens 26 bzw. den Verschiebeweg des Ausrücklagers 12 zurückzuschließen. Da das Ausrücklager 12 mittels der Vorlastfeder 14 im montierten Zustand des Zentralausrückers 10 spielfrei gegen die weiteren Ausrückelemente der Trockenreibkupplung (z.B. Membranfederzungen; nicht dargestellt) verspannt ist, ist somit gleichermaßen ein Maß für den Aus- bzw. Einrückweg der Trockenreibkupplung gegeben. Entsprechendes gilt für den Verschleißzustand der Trockenreibkupplung: Mit zunehmendem Verschleiß der Reibbeläge der Trockenreibkupplung wandert das Ausrücklager 12 nämlich in Richtung des Gehäuses 20 des Zentralausrückers 10, d.h. nach links in Fig. 2, wobei sich die Kraft der Vorlastfeder 14 vom Sensor 18 der Sensoreinrichtung 16 erfaßbar erhöht.

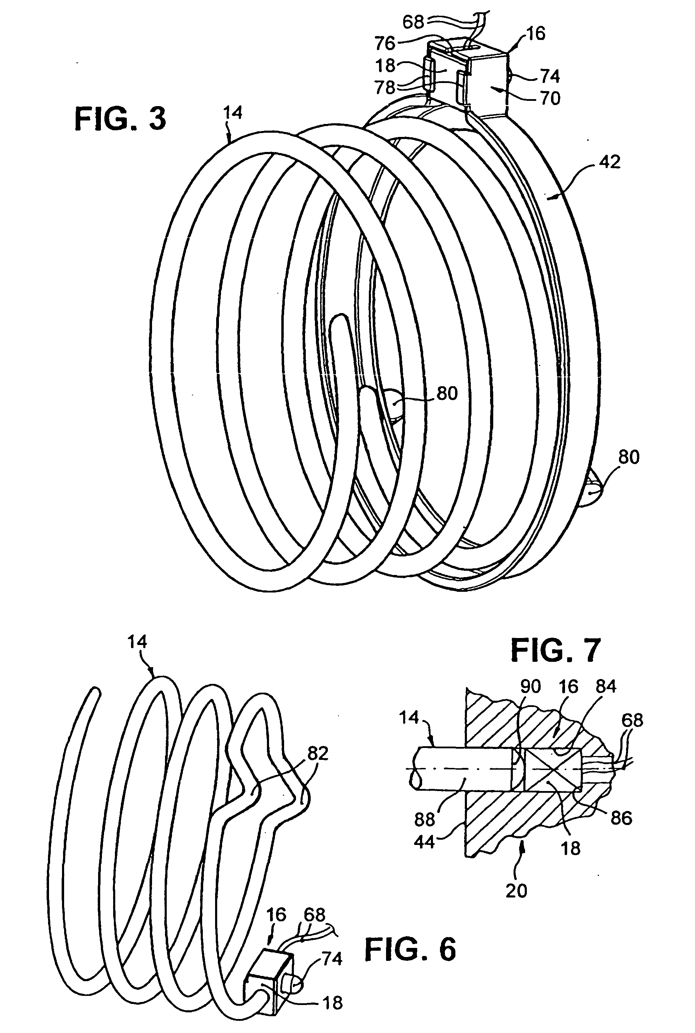

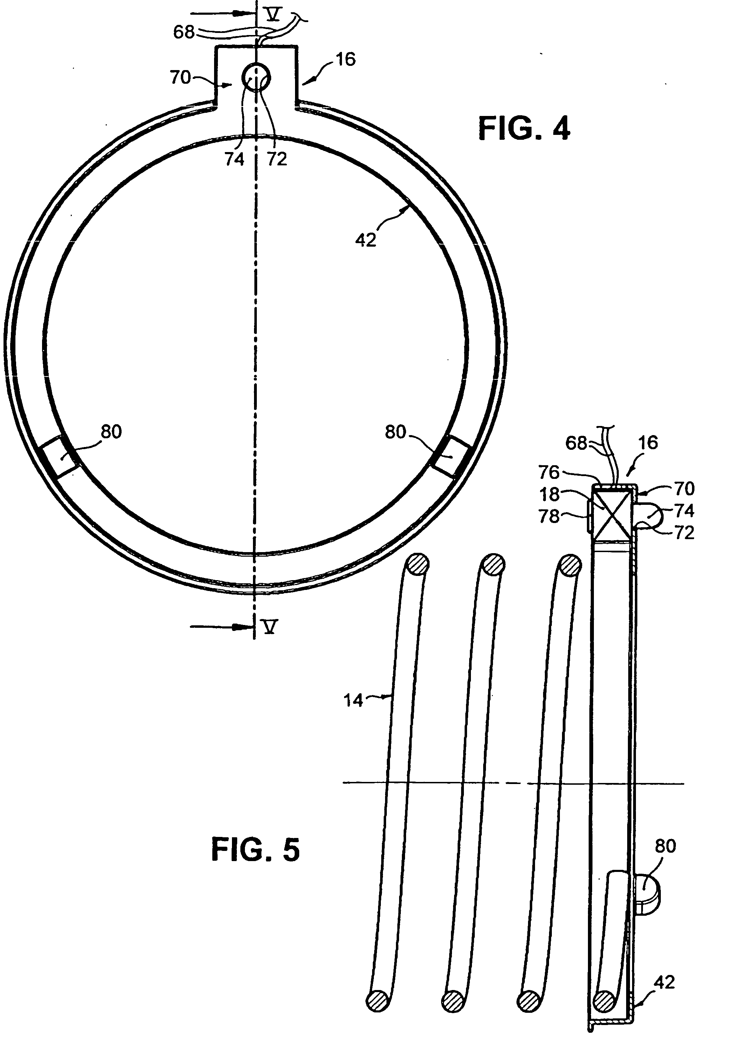

In den Fig. 3 bis 5 sind weitere Einzelheiten der Sensoreinrichtung 16 des in den Fig. 1 und 2 dargestellten Zentralausrückers 10 gezeigt, bei dessen Sensor 18 es sich vorzugsweise um einen elektrischen Drucksensor mit einem Piezoelement handelt, welcher unter mechanischer Beanspruchung durch die Vorlastfeder 14 ein dem Belastungszustand entsprechendes, proportionales Signal als elektrische Spannung abgibt, die über elektrische Signalleitungen 68 an einen Bordcomputer des Kraftfahrzeugs (nicht dargestellt) zur Auswertung angelegt ist.

Gemäß insbesondere den Fig. 1, 2, 3 und 5 ist der Sensor 18 an dem dem Gehäuse 20 des Zentralausrückers 10 zugewandten, d.h. dem vom Ausrücklager 12 abgewandten Ende der Vorlastfeder 14 derart am Federteller 42 angeordnet, daß er sich mit der Vorlastfeder 14 in Reihe bzw. im Kraftfluß zwischen der Vorlastfeder 14 und dem Gehäuse 20 des Zentralausrückers 10 befindet. Dafür ist einstückig mit dem im Profil gemäß Fig. 5 unten im wesentlichen L-förmigen Federteller 42 ein im wesentlichen kastenförmiger Befestigungsabschnitt 70 ausgebildet, der radial nach außen über den Umfang des Federtellers 42 vorsteht und in dem der Sensor 18 und ggf. auch eine Auswerteelektronik (nicht dargestellt) für den Sensor 18 aufgenommen sind.

Wie insbesondere die Fig. 4 und 5 zeigen, hat der Befestigungsabschnitt 70 auf seiner der Planfläche 44 am Gehäuse 20 des Zentralausrückers 10 zugewandten Seite eine zentrale Öffnung 72, durch die sich ein Betätigungsabschnitt 74 des Sensors 18 hindurcherstreckt, so daß der Betätigungsabschnitt 74 vom Federteller 42 in Richtung der Planfläche 44 definiert vorsteht. An seiner radial außen gelegenen Seite ist der Befestigungsabschnitt 70 ausgehend von seiner von der Planfläche 44 am Gehäuse 20 des Zentralausrückers 10 abgewandten Seite mit einem Schlitz 76 versehen, durch den sich die Signalleitungen 68 vom Sensor 18 nach außen hindurcherstrecken. Auf der von der Planfläche 44 am Gehäuse 20 des Zentralausrückers 10 abgewandten Seite des Befestigungsabschnitts 70 sind schließlich zwei Befestigungslaschen 78 ausgebildet, die, wie insbesondere in Fig. 3 gut zu erkennen ist, in ihrem aufeinander zu umgebogenen Zustand den Sensor 18 hintergreifen, um den Sensor 18 formschlüssig im Befestigungsabschnitt 70 festzulegen.

Weiterhin ist der Federteller 42 ausgehend von seiner der Planfläche 44 am Gehäuse 20 des Zentralausrückers 10 zugewandten Stirnseite mit zwei Blechausstellungen 80 versehen, die wie der Betätigungsabschnitt 74 des Sensors 18 vom Federteller 42 definiert vorstehen. Der Betätigungsabschnitt 74 des Sensors 18 und die Blechausstellungen 80 bilden somit drei gleichmäßig am Umfang des Federtellers 42 verteilte Auflagerabschnitte aus, mittels der der Federteller 42 statisch bestimmt an der Planfläche 44 des Gehäuses 20 des Zentralausrückers 10 anliegt. Durch die beschriebene ausrücklagerferne Anordnung und Dreipunktabstützung hat der Sensor 18 insgesamt einen klar definierten, schwingungsarmen Ruhepunkt, was u.a. der Eindeutigkeit der vom Sensor 18 abgegebenen Signale förderlich ist.

Die Verdrehsicherung der Vorlastfeder 14 kann im dargestellten Ausführungsbeispiel mittels an sich bekannter, hier nicht gezeigter formschlüssiger Maßnahmen zwischen dem Ringkolben 26 und dem Gehäuse 20 des Zentralausrückers 10 oder durch an sich bekannte, in Umfangsrichtung wirkende Arretierungen der Vorlastfeder 14 zum Gehäuse 20 erfolgen. Auch ist es denkbar, daß die Signalleitungen 68 bei entsprechender Dimensionierung und Befestigung die in Umfangsrichtung am Federteller 42 wirkenden Kräfte aufnehmen können, so daß keine weiteren Maßnahmen zur Verdrehsicherung notwendig sind.

Obgleich im dargestellten Ausführungsbeispiel eine Befestigung des Sensors 18 im Befestigungsabschnitt 70 mittels Befestigungslaschen 78 gezeigt wird, sind dazu Alternativen denkbar. So könnte der Sensor 18 auch mittels einer Schnappverbindung oder einer Klebeverbindung im Befestigungsabschnitt 70 des Federtellers 42 festgelegt werden. Weiterhin ist es möglich, wenngleich in den Figuren nicht gezeigt, den Federteller 42 zwei- bzw. mehrteilig auszubilden, was die Montage der Sensoreinrichtung 16 bzw. deren Nachrüstung erleichtern würde, da die Sensoreinrichtung 16 bzw. der Federteller 42 radial gefügt werden könnte.

Die Fig. 6 zeigt eine Alternative zu dem Ausführungsbeispiel gemäß den Fig. 1 bis 5. Bei dem in Fig. 6 dargestellten Ausführungsbeispiel ist kein Federteller vorhanden, über den die Vorlastfeder 14 an der Planfläche 44 am Gehäuse 20 des Zentralausrückers 10 anliegen würde. Vielmehr ist der Sensor 18 in radial kompakter Bauweise direkt auf das gehäuseseitige Ende der Vorlastfeder 14 aufgesteckt und dort auf geeignete Weise, z.B. durch Kleben und/oder formschlüssige Maßnahmen, wie Rastnasen, befestigt. Auch bei diesem Ausführungsbeispiel bildet der Betätigungsabschnitt 74 des Sensors 18 einen Auflagerabschnitt aus, während zwei weitere Auflagerabschnitte durch sich in Richtung der Planfläche 44 am Gehäuse 20 des Zentralausrückers 10 erstreckende Ausbiegungen 82 der letzten gehäuseseitigen Windung der Vorlastfeder 14 ausgebildet sind. Somit kann sich auch in diesem Fall die Vorlastfeder 14 an drei gleichmäßig am Umfang verteilten Punkten statisch bestimmt an der Planfläche 44 des Gehäuses 20 des Zentralausrückers 10 abstützen.

Anstelle der Ausbiegungen 82 an der Vorlastfeder 14 wäre es auch denkbar, zwei Auflagerteile auf die letzte gehäuseseitige Windung der Vorlastfeder 14 gleichmäßig winkelbeabstandet vom Sensor 18 aufzustecken und dort geeignet, beispielsweise durch Kleben und/oder formschlüssige Maßnahmen zu befestigen, um eine statisch bestimmte Auflagesituation zu erzielen.

Die Fig. 7 veranschaulicht eine weitere Alternative zu den unter Bezugnahme auf die Fig. 1 bis 5 bzw. 6 beschriebenen Ausführungsbeispielen. Bei dem in Fig. 7 dargestellten Ausführungsbeispiel ist ausgehend von der Planfläche 44 in das Gehäuse 20 des Zentralausrückers 10 eine Stufenbohrung 84 eingebracht, in deren durchmessergrößeren Teil der Sensor 18 angeordnet ist. Dabei liegt der Sensor 18 an einem Absatz 86 in der Stufenbohrung 84 an, während die mit dem Sensor 18 verbundenen Signalleitungen 68 durch den durchmesserkleineren Teil der Stufenbohrung 84 bis auf die andere Seite des Gehäuses 20 des Zentralausrückers 10 hinausgeführt sind. Ferner weist die Vorlastfeder 14 einen sich in Richtung der Stufenbohrung 84 erstreckenden bzw. in diese Richtung abgekröpften Endabschnitt 88 auf, der in die Stufenbohrung 84 eingreift und dort mit einem kugelkalottenförmigen Ende 90 betätigungswirksam am Sensor 18 anliegt. Um für eine statisch bestimmte Dreipunktanlage der Vorlastfeder 14 am Gehäuse 20 des Zentralausrückers 10 zu sorgen, können die unter Bezugnahme auf die Fig. 6 beschriebenen Maßnahmen (Ausbiegungen bzw. Auflagerteile) zum Einsatz kommen. Bei diesem Ausführungsbeispiel gestaltet sich die Befestigung des Sensors 18 besonders einfach, wobei zudem der Endabschnitt 88 der Vorlastfeder 14 vorteilhaft für eine Verdrehsicherung der Vorlastfeder 14 sorgt.

In einer Abwandlung der Ausgestaltung gemäß Fig. 7 kann anstelle des abgekröpften Endabschnitts 88 der Vorlastfeder 14 ein Vorsprung (nicht dargestellt) am Federteller 42 gemäß den Fig. 1 bis 5 vorgesehen sein, der in die Stufenbohrung 84 eingreift, um betätigungswirksam am Sensor 18 anzuliegen. Bei einer solchen Ausgestaltung kann die Vorlastfeder 14 wie in den Fig. 2, 3 und 5 gezeigt ausgebildet sein.

Die Fig. 8 bis 10 zeigen schließlich einen anderen hydraulischen Zentralausrücker 10 mit einer Sensoreinrichtung 16, deren Sensor 18 nicht mit der Vorlastfeder 14, sondern mit einer dazu parallel angeordneten Feder 19, im dargestellten Ausführungsbeispiel einer Zugfeder, zusammenwirkt. Das Ausführungsbeispiel gemäß den Fig. 8 bis 10 soll nachfolgend nur insoweit beschrieben werden, als es sich vom Ausführungsbeispiel gemäß den Fig. 1 bis 5 unterscheidet und es für das Verständnis der Erfindung erforderlich erscheint, wobei den Teilen im Ausführungsbeispiel gemäß den Fig. 1 bis 5 gleiche oder entsprechende Teile in den Fig. 8 bis 10 mit den gleichen Bezugszahlen versehen sind.

Im Gegensatz zu den vorhergehend beschriebenen Ausführungsbeispielen ist das gehäuseseitige Ende der Vorlastfeder 14 gemäß insbesondere der Fig. 10 in einer Ringnut 92 aufgenommen, die axial in das Gehäuse 20 des Zentralausrückers 10 eingebracht ist. Das ausrücklagerseitige Ende der Vorlastfeder 14 hingegen drückt über den Federteller 40 gegen das Ausrücklager 12, wobei am Federteller 40 ein sich radial vom Federteller 40 wegerstreckender Arm 94 angebracht ist, an den das ausrücklagerseitige Ende der Zugfeder 19 angehängt ist. Das gehäuseseitige Ende der sich parallel zur Vorlastfeder 14 erstreckenden Zugfeder 19 ist an einem Hebel 96 der Sensoreinrichtung 16 befestigt, der über einen nicht näher gezeigten Umlenkmechanismus mit dem Piezoelement des Sensors 18 wirkverbunden ist, so daß eine zu der Zugkraft der Feder 19 proportionale Druckkraft auf das Piezoelement des Sensors 18 aufgebracht wird. Der Sensor 18 selbst ist auf geeignete Weise, z.B. mittels einer Schraub- oder Klipsverbindung (nicht dargestellt), an einem der Flanschabschnitte 50 des Gehäuses 20 befestigt.

Es ist ersichtlich, daß bei einer Bewegung des ggf. über den mit dem Druckraum 28 verbundenen Hydraulikanschluß 58 druckbeaufschlagten Ringkolbens 26 und damit des Ausrücklagers 12 die zwischen dem Arm 94 am infolge der Vorspannkraft der Vorlastfeder 14 am Ausrücklager 12 anliegenden Federteller 40 und dem Hebel 96 der Sensoreinrichtung 16 gespannte Zugfeder 19 entspannt (Bewegung des Ringkolbens 26 nach links in Fig. 10) bzw. gezogen wird (Bewegung des Ringkolbens 26 nach rechts in Fig. 10). Hierbei ändert sich entsprechend der vorzugsweise linearen Kraft-Weg-Charakteristik der Zugfeder 19 die mittels des Sensors 18 der Sensoreinrichtung 16 erfaßbare Kraft der Zugfeder 19. Mit anderen Worten gesagt, ist es über die bekannte Kraft-Weg-Charakteristik der zur Vorlastfeder 14 parallel geschalteten Zugfeder 19 in Kenntnis der Kraft der Zugfeder 19 möglich, auf den Federweg der Zugfeder 19 und damit mittelbar den Hub des Ringkolbens 26 bzw. den Verschiebeweg des Ausrücklagers 12 zurückzuschließen. Da, wie bereits erwähnt, das Ausrücklager 12 mittels der Vorlastfeder 14 im montierten Zustand des Zentralausrückers 10 spielfrei gegen die weiteren Ausrückelemente der Trockenreibkupplung verspannt ist, ist somit gleichermaßen ein Maß für den Aus- bzw. Einrückweg der Trockenreibkupplung gegeben. Mit zunehmendem Verschleiß der Reibbeläge der Trockenreibkupplung wandert das Ausrücklager 12 wie oben schon beschrieben in Richtung des Gehäuses 20 des Zentralausrückers 10, d.h. nach links in Fig. 10, wobei die Federkraft der Zugfeder 19 vom Sensor 18 der Sensoreinrichtung 16 erfaßbar abnimmt. Somit kann auch der Verschleißzustand der Trockenreibkupplung ermittelt werden.

Bei dem Ausführungsbeispiel gemäß den Fig. 8 bis 10 ist nur eine Zugfeder 19 vorgesehen. Den jeweiligen Erfordernissen entsprechend können aber auch zwei oder mehr zur Vorlastfeder 14 parallel geschaltete Zugfedern vorgesehen sein, die vorzugsweise gleichmäßig über den Umfang des Zentralausrückers 10 verteilt sind, damit kein Kippmoment am Ausrücklager 12 angreift.

Obgleich die erfindungsgemäße Sensoreinrichtung oben anhand von Ausführungsbeispielen beschrieben wurde, bei denen ein Zentralausrücker eine sogenannte "gedrückte" Trockenreibkupplung betätigt, ist für den Fachmann ersichtlich, daß ein entsprechender Sensor zur Erfassung der Federkraft der Vorlastfeder oder einer dazu parallel geschalteten Feder auch an einer sogenannten "gezogenen" Trockenreibkupplung zum Einsatz kommen kann.

Es wird eine Vorrichtung zum wahlweise Aus- bzw. Einrücken einer Reibkupplung für Kraftfahrzeuge offenbart, mit einem vorzugsweise hydraulischen Betätigungsorgan, wie einem Zentralausrücker, das über wenigstens ein mittels einer Feder in Ausrückrichtung vorgespanntes Betätigungskraft-Übertragungsglied, wie einem Ausrücklager, zur Aufbringung einer Betätigungskraft mit der Reibkupplung wirkverbunden ist. Die Vorrichtung hat ferner eine Sensoreinrichtung mit einem Sensor zur Erfassung einer für den Aus- bzw. Einrückzustand und/oder den Verschleißzustand der Reibkupplung repräsentativen Größe. Erfindungsgemäß ist mittels des Sensors die Kraft der Feder zur Vorspannung des Betätigungskraft-Übertragungsglieds oder einer dazu parallel geschalteten Feder als die für den Aus- bzw. Einrückzustand und/oder den Verschleißzustand der Reibkupplung repräsentative Größe erfaßbar. Im Ergebnis wird eine Vorrichtung geschaffen, bei der eine für den Aus- bzw. Einrückzustand und/oder den Verschleißzustand der Reibkupplung repräsentative Größe auf besonders einfache Weise erfaßt werden kann.

### Bezugszeichenliste

- 10: Zentralausrücker
- 12: Ausrücklager
- 14: Vorlastfeder
- 16: Sensoreinrichtung
- 18: Sensor
- 19: Feder
- 20: Gehäuse
- 22: Hülse
- 24: Flansch
- 26: Ringkolben
- 28: Druckraum
- 30: O-Ring
- 32: Dichtmanschette
- 34: Blechteil
- 36: Sicherungsring
- 38: Blechring
- 40: Federteller
- 42: Federteller
- 44: Planfläche
- 46: Wandungsabschnitt
- 48: Durchgangsbohrung
- 50: Flanschabschnitt
- 52: Befestigungsauge
- 54: Fortsatz
- 56: Wellendichtring
- 58: Hydraulikanschluß
- 60: Bohrung
- 62: Querbohrung
- 64: Ringspalt
- 66: Außenumfangsfläche
- 68: Signalleitung
- 70: Befestigungsabschnitt
- 72: Öffnung
- 74: Betätigungsabschnitt
- 76: Schlitz
- 78: Befestigungslasche
- 80: Blechausstellung
- 82: Ausbiegung
- 84: Stufenbohrung
- 86: Absatz
- 88: Endabschnitt
- 90: Ende
- 92: Ringnut
- 94: Arm
- 96: Hebel

## Patentansprüche

1. Vorrichtung zum wahlweise Aus- bzw. Einrücken einer Reibkupplung für Kraftfahrzeuge, mit einem vorzugsweise hydraulischen Betätigungsorgan (10), das über wenigstens ein mittels einer Feder (14) in Ausrückrichtung vorgespanntes Betätigungskraft-Übertragungsglied (12) zur Aufbringung einer Betätigungskraft mit der Reibkupplung wirkverbunden ist, und einer Sensoreinrichtung (16) zur Erfassung einer für den Aus- bzw. Einrückzustand und/oder den Verschleißzustand der Reibkupplung repräsentativen Größe mit einem Sensor (18), **dadurch gekennzeichnet, daß** mittels des Sensors (18) die Kraft der Feder (14) zur Vorspannung des Betätigungskraft-Übertragungsglieds (12) oder einer dazu parallel geschalteten Feder (19) als die für den Aus- bzw. Einrückzustand und/oder den Verschleißzustand der Reibkupplung repräsentative Größe erfaßbar ist.

2. Vorrichtung nach Anspruch 1, **dadurch gekennzeichnet, daß** es sich bei dem Sensor um einen elektrischen Drucksensor (18) handelt.

3. Vorrichtung nach Anspruch 2, **dadurch gekennzeichnet, daß** der elektrische Drucksensor (18) ein Piezoelement aufweist.

4. Vorrichtung nach einem der vorhergehenden Ansprüche, **dadurch gekennzeichnet, daß** der Sensor (18) mit der Feder (14) zur Vorspannung des Betätigungskraft-Übertragungsglieds (12) oder der dazu parallel geschalteten Feder (19) in Reihe angeordnet ist.

5. Vorrichtung nach einem der vorhergehenden Ansprüche, **dadurch gekennzeichnet, daß** der Sensor (18) auf der vom Betätigungskraft-Übertragungsglied (12) abgewandten Seite der Feder (14) zur Vorspannung des Betätigungskraft-Übertragungsglieds (12) oder der dazu parallel geschalteten Feder (19) angeordnet ist.

6. Vorrichtung nach einem der vorhergehenden Ansprüche, **dadurch gekennzeichnet, daß** das Betätigungsorgan ein Nehmerzylinder, vorzugsweise ein Zentralausrücker (10) einer hydraulischen Kupplungsbetätigung ist, der über ein mittels einer Vorlastfeder (14) in Ausrückrichtung vorgespanntes Ausrücklager (12) als Betätigungskraft-Übertragungsglied zur Aufbringung einer Betätigungskraft mit der Reibkupplung wirkverbunden ist.

7. Vorrichtung nach Anspruch 6, **dadurch gekennzeichnet, daß** die Vorlastfeder (14) als Druckfeder, vorzugsweise Schraubendruckfeder ausgebildet ist, die sich über ihr eines Ende am Ausrücklager (12) und über ihr anderes Ende an einem Gehäuse (20) des Zentralausrückers (10) abstützt, wobei der Sensor (18) im Kraftfluß zwischen der Vorlastfeder (14) und dem Gehäuse (20) des Zentralausrückers (10) angeordnet ist.

8. Vorrichtung nach Anspruch 7, **dadurch gekennzeichnet, daß** am gehäuseseitigen Ende der Vorlastfeder (14) ein Federteller (42) vorgesehen ist, über den sich die Vorlastfeder (14) am Gehäuse (20) des Zentralausrückers (10) abstützt, wobei der Sensor (18) am oder im Federteller (42) angeordnet ist.

9. Vorrichtung nach Anspruch 8, **dadurch gekennzeichnet, daß** der Federteller (42) einen Befestigungsabschnitt (70) aufweist, in dem der Sensor (18) und vorzugsweise auch eine Auswerteelektronik für den Sensor (18) aufgenommen sind.

10. Vorrichtung nach Anspruch 8 oder 9, **dadurch gekennzeichnet, daß** der Federteller (42) mit Hilfe von drei Auflagerabschnitten (74, 80) statisch bestimmt an einer Planfläche (44) des Gehäuses (20) des Zentralausrückers (10) anliegt, wobei der Sensor (18) einen Betätigungsabschnitt (74) aufweist, der einen der drei Auflagerabschnitte (74, 80) ausbildet.

11. Vorrichtung nach Anspruch 7, **dadurch gekennzeichnet, daß** sich die Vorlastfeder (14) an drei Punkten an einer Planfläche (44) des Gehäuses (20) des Zentralausrückers (10) abstützt, wozu ein Betätigungsabschnitt (74) des auf das gehäuseseitige Ende der Vorlastfeder (14) aufgesteckten Sensors (18) einen Auflagerabschnitt ausbildet, während zwei weitere Auflagerabschnitte durch sich in Richtung der Planfläche (44) erstreckende Ausbiegungen (82) der letzten gehäuseseitigen Windung der Vorlastfeder (14) oder zwei darauf aufgesteckte Auflagerteile ausgebildet sind.

12. Vorrichtung nach Anspruch 7, **dadurch gekennzeichnet, daß** das Gehäuse (20) des Zentralausrückers (10) eine Bohrung (84) aufweist, in welcher der Sensor (18) angeordnet ist, wobei ein sich in Richtung der Bohrung (84) erstreckender Endabschnitt (88) der Vorlastfeder (14) in die Bohrung (84) eingreift und betätigungswirksam am Sensor (18) anliegt.

13. Vorrichtung nach einem der Ansprüche 1 bis 6, **dadurch gekennzeichnet, daß** die zu der Feder (14) zur Vorspannung des Betätigungskraft-Übertragungsglieds (12) parallel geschaltete Feder (19) eine Zugfeder ist.

## Claims

1. A device for the optional disengaging and engaging, respectively, of a friction clutch for motor vehicles, with a preferably hydraulic actuating mechanism (10), which, for applying an actuating force, is operatively connected with the friction clutch via at least one actuating force transmission member (12) pre-stressed in the disengaging direction by means of a spring (14), and a sensor device (16) for sensing a variable representative of the disengaging respectively engaging state of and/or the state of wear on the friction clutch with a sensor (18), **characterized in that** using the sensor (18) the force of the spring (14) for pre-stressing the actuating force transmission member (12) or a spring (19) arranged in parallel with it can be sensed as the variable representative of the disengaging respectively engaging state of and/or of the state of wear on the friction clutch.

2. A device according to claim 1, **characterized in that** the sensor is an electric pressure sensor (18).

3. A device according to claim 2, **characterized in that** the electric pressure sensor (18) has a piezoelectric element.

4. A device according to one of the preceding claims, **characterized in that** the sensor (18) is arranged in series with the spring (14) for pre-stressing the actuating force transmission member (12) or with the spring (19) arranged in parallel with it.

5. A device according to one of the preceding claims, **characterized in that** the sensor (18) is arranged on that side of the spring (14) for pre-stressing the actuating force transmission member (12) or of the spring (19) arranged in parallel to it, which side faces away from the actuating force transmission member (12).

6. A device according to one of the preceding claims, **characterized in that** the actuating mechanism is a slave cylinder, preferably a central disengaging device (10) of a hydraulic clutch control, which, for applying an actuating force, is operatively connected with the friction clutch by means of a release bearing (12) as the actuating force transmission member, which is pre-stressed by a pre-load spring (14) in the disengaging direction.

7. A device according to claim 6, **characterized in that** the pre-load spring (14) is formed as a compression spring, preferably a coil compression spring, which is supported at its one end at the release bearing (12) and at its other end at a housing (20) of the central disengaging device (10), the sensor (18) being arranged in a flux of force between the pre-load spring (14) and the housing (20) of the central disengaging device (10).

8. A device according to claim 7, **characterized in that** a spring plate (42) is provided at the housing-side end of the pre-load spring (14), via which the pre-load spring (14) is supported at the housing (20) of the central disengaging device (10), the sensor (18) being arranged at or in the spring plate (42).

9. A device according to claim 8, **characterized in that** the spring plate (42) has a fixing section (70), in which the sensor (18) and preferably evaluator electronics for the sensor (18) as well are received.

10. A device according to claim 8 or 9, **characterized in that** the spring plate (42), with the aid of three bearing sections (74, 80), abuts in statically determined fashion on a plane surface (44) of the housing (20) of the central disengaging device (10), the sensor (18) having an actuating section (74) which forms one of the three bearing sections (74, 80).

11. A device according to claim 7, **characterized in that** the pre-load spring (14) is supported at three points on a plane surface (44) of the housing (20) of the central disengaging device, wherein an actuating section (74) of the sensor (18) placed on the housing-side end of the pre-load spring (14) forms a bearing section, whilst two further bearing sections are formed by deflections (82) of the last housing-side turn of the pre-load spring (14), which deflections extend in a direction towards the plane surface (44), or by two bearing parts slipped on it.

12. A device according to claim 7, **characterized in that** the housing (20) of the central disengaging device (10) has a bore (84) in which the sensor (18) is arranged, a final section (88) of the pre-load spring (14) extending in a direction of the bore (84), engages in the bore (84) and abuts the sensor (18) with an actuating effect.

13. A device according to one of claims 1 to 6, **characterized in that** the spring (19) arranged in parallel to the spring (14) for pre-stressing the actuating force transmission member (12) is a tension spring.

## Revendications

1. Dispositif pour sélectivement embrayer/débrayer un embrayage à friction pour véhicule automobile, comprenant un organe d'actionnement (10), de préférence hydraulique, relié en coopération d'action à l'embrayage à friction par l'intermédiaire d'au moins un organe de transmission de force d'actionnement (12) précontraint au moyen d'un ressort (14) en direction de débrayage pour appliquer une force d'actionnement, et un dispositif capteur (16) pour détecter une grandeur représentative de l'état de débrayage/embrayage et/ou l'état d'usure de l'embrayage à friction, comprenant un capteur (18), **caractérisé en ce que**, au moyen du capteur (18), il est possible de détecter la force du ressort (14) pour précontraindre l'organe de transmission de force d'actionnement (12) ou d'un ressort (19) monté parallèlement à celui-ci, à titre de grandeur représentative de l'état de débrayage/embrayage et/ou de l'état d'usure de l'embrayage à friction.

2. Dispositif selon la revendication 1, **caractérisé en ce que** le capteur est un capteur de pression électrique (18).

3. Dispositif selon la revendication 2, **caractérisé en ce que** le capteur de pression électrique (18) comprend un élément piézo-électrique.

4. Dispositif selon l'une des revendications précédentes, **caractérisé en ce que** le capteur (18) est agencé en série avec le ressort (14) destiné à précontraindre l'organe de transmission de force d'actionnement (12) ou avec le ressort (19) monté parallèlement à celui-ci.

5. Dispositif selon l'une des revendications précédentes, **caractérisé en ce que** le capteur (18) est agencé sur le côté, détourné de l'organe de transmission de force d'actionnement (12), du ressort (14) destiné à précontraindre l'organe de transmission de force d'actionnement (12), ou du ressort (19) monté parallèlement à celui-ci.

6. Dispositif selon l'une des revendications précédentes, **caractérisé en ce que** l'organe d'actionnement est un cylindre récepteur, de préférence un cylindre de débrayage central (10) d'un actionnement d'embrayage hydraulique, qui est relié en coopération d'action à l'embrayage à friction via un palier de débrayage (12) précontraint en direction de débrayage au moyen d'un ressort (14) de précharge, à titre d'organe de transmission de force d'actionnement pour appliquer une force d'actionnement.

7. Dispositif selon la revendication 6, **caractérisé en ce que** le ressort (14) de précharge est réalisé sous forme de ressort de compression, de préférence de ressort de compression à boudin, qui s'appuie par une extrémité sur le palier de débrayage (12) et par son autre extrémité sur un boîtier (20) du cylindre de débrayage central (10), ledit capteur (18) étant agencé dans le trajet des forces entre le ressort (14) de précharge et le boîtier (20) du cylindre de débrayage central (10).

8. Dispositif selon la revendication 7, **caractérisé en ce qu'**il est prévu, à l'extrémité du ressort (14) de précharge côté boîtier, une rondelle-ressort (42) au moyen de laquelle le ressort (14) de précharge s'appuie sur le boîtier (20) du cylindre de débrayage central (10), ledit capteur (18) étant agencé sur ou dans la rondelle-ressort (42).

9. Dispositif selon la revendication 8, **caractérisé en ce que** la rondelle-ressort (42) comprend un tronçon de fixation (70) dans lequel est logé le capteur (18), et de préférence également une unité électronique d'évaluation pour le capteur (18).

10. Dispositif selon l'une ou l'autre des revendications 8 et 9, **caractérisé en ce que** la rondelle-ressort (42) s'appuie d'une manière déterminée sur le plan statique par trois tronçons d'appui (74, 80) sur une surface plane (44) du boîtier (20) du cylindre de débrayage central (10), le capteur (18) comprenant un tronçon d'actionnement (74) qui forme l'un des trois tronçons d'appui (74, 80).

11. Dispositif selon la revendication 7, **caractérisé en ce que** le ressort (14) de précharge s'appuie en trois points sur une surface plane (44) du boîtier (20) du cylindre de débrayage central (10), ce pourquoi un tronçon d'actionnement (74) du capteur (18) enfilé sur l'extrémité côté boîtier du ressort (14) de précharge forme un tronçon d'appui, tandis que deux autres tronçons d'appui sont formés par des coudes (82), s'étendant en direction de la surface plane (44), de la dernière spire côté boîtier du ressort (14) de précharge, ou de deux pièces d'appui enfilées sur celui-ci.

12. Dispositif selon la revendication 7, **caractérisé en ce que** le boîtier (20) du cylindre de débrayage central (10) comporte un perçage (84) dans lequel est agencé le capteur (18), un tronçon terminal (88) du ressort (14) de précharge, qui s'étend en direction du perçage (84), s'engageant dans le perçage (84) et s'appuyant contre le capteur (18) de manière efficace en termes d'actionnement.

13. Dispositif selon l'une des revendications 1 à 6, **caractérisé en ce que** le ressort (19) monté parallèlement au ressort (14) destiné à précontraindre l'organe de transmission de force d'actionnement (12) est un ressort de traction.
